Europäisches Patentamt

European Patent Office

Office européen des brevets

(19)

(11) Veröffentlichungsnummer: **0 223 195**
**B1**

(12) **EUROPÄISCHE PATENTSCHRIFT**

(51) Int. Cl.⁴: **F 23 R  3/08, F 23 R  3/54**

(45) Veröffentlichungstag der Patentschrift:
**27.09.89**

(21) Anmeldenummer: **86115713.9**

(22) Anmeldetag: **12.11.86**

(54) Umkehrbrennkammer, insbesondere Umkehrringbrennkammer, für Gasturbinentriebwerke, mit mindestens einer Flammrohrwandfilmkühleinrichtung.

(30) Priorität: **19.11.85  DE 3540942**

(43) Veröffentlichungstag der Anmeldung:
**27.05.87 Patentblatt 87/22**

(45) Bekanntmachung des Hinweises auf die Patenterteilung:
**27.09.89 Patentblatt 89/39**

(84) Benannte Vertragsstaaten:
**CH DE ES FR GB IT LI SE**

(56) Entgegenhaltungen:
**DE-A- 1 476 801**
**DE-A- 2 622 234**
**FR-A- 2 498 252**
**GB-A- 2 036 945**
**GB-A- 2 131 540**
**US-A- 2 699 648**
**US-A- 3 978 662**

(73) Patentinhaber: **MTU MOTOREN- UND TURBINEN-UNION MÜNCHEN GMBH, Dachauer Strasse 665 Postfach 50 06 40, D-8000 München 50 (DE)**

(72) Erfinder: **Rohlffs, Martin, F.H., Bulachstrasse 44, D-8066 Günding (DE)**
Erfinder: **Joos, Franz, Dr.-Ing., Düsseldorferstrasse 11, D-8000 München 40 (DE)**
Erfinder: **Simon, Burkhard, Dr.-Ing., Plattenfeld 5, D-8061 Röhrmoos (DE)**

## Beschreibung

Die Erfindung bezieht sich auf eine Umkehrbrennkammer nach dem Oberbegriff des Patentanspruchs 1.

Brennkammern für Gasturbinentriebwerke sind aufgrund der hohen Verbrennungstemperaturen sehr großen thermischen Belastungen ausgesetzt. Da Materialien, die diesen Temperaturen ungekühlt standhalten, nicht einsetzbar sind, muß das Flammrohr durch geeignete Kühlkonfigurationen gekühlt werden. Dies wird neben einer Konvektionskühlung hauptsächlich durch eine Filmkühlung erreicht. Bei dieser Methode wird die Kühlluft durch spezielle Öffnungen in der Flammrohrwand derart in die Brennkammer eingeblasen, daß sich ein schützender Kühlfilm stromab von der Einblasestelle an der Flammrohrinnenwand ausbildet.

Durch die ständig steigenden Verdichterdruckverhältnisse und die dadurch zunehmenden Brennkammereintrittstemperaturen müssen Kühlfilme mit immer höherer Effektivität eingesetzt werden. Zur Verbesserung der Kühlfilmeffektivität existieren grundsätzlich zwei Wege. Man kann unter anderem die Kühlkonfiguration, also die geometrische Ausführung der Einblasestelle, verbessern oder man erhöht den Kühlluftdurchsatz. Dem letzteren Weg sind dadurch Grenzen gesetzt, daß bei hochbeanspruchten Gasturbinen die Kühlluftmenge begrenzt ist, da ein großer Teil der zur Verfügung stehenden Luft als Mischluft zur Steuerung des Temperaturprofils am Turbineneintritt benötigt wird.

Eine wesentliche Problematik für die Kühlfilmausbildung bei hochbelasteten Umkehrbrennkammern besteht darin, daß eine gegensinnige Strömung im äußeren Sekundärkanal zur Strömung im Flammrohr vorliegt. Die bisher eingesetzten Prallkühlfilme sind nicht effektiv genug, um thermisch hoch belastete Flammrohrwände zu kühlen. Die Kühlfilme werden dann entweder mit verhältnismäßig großen Durchsätzen und demzufolge mit verhältnismäßig großen Luftauffangbohrungen erzeugt, oder wegen zu geringer Lauflänge des Kühlfilms bei kleinen Durchsätzen durch zahlreiche weitere Kühlfilmeinrichtungen ergänzt.

Im Bestreben, eine optimale Kühlfilmausbildung bei Umkehrbrennkammern zu erreichen, ist es eine unabdingbare Voraussetzung, eine
- sehr gute Beladung der betreffenden Ring- oder Drallkammer sowie eine
- möglichst große Lauflänge des Kühlfilmes in der Heißgasströmung
zu schaffen.

Die kombinierte Voraussetzung hängt wiederum unmittelbar mit der Art und Ausbildung der von der Kühlfilmeinrichtung im Sekundärkanal hervorgerufenen Sekundärstromablösung zusammen.

Je nach Ausprägungsumfang der Sekundärstromablösung wird ferner wiederum die Konvektionskühlung der Kühlfilmeinrichtung mehr oder weniger stark nachteilhaft beeinflußt.

Weitere Voraussetzung einer optimalen Kühlfilmeinrichtung ist die Schaffung eines über dem gesamten Umfang homogenen Kühlfilms mit verhältnismäßig großer Lauflänge, wenn es gelingt, einen in radialer und in Umfangsrichtung ausgeglichenen Film mit geringer Turbulenz aufzubauen.

Ferner wird eine aerodynamisch verlustarme, homogene und verbrauchsarme Strahlumlenkung über die betreffende Kühlfilmeinrichtung angestrebt.

Bei einer aus der US-PS 3 589 128 bekannten und dem Oberbegriff des Patentanspruchs 1 zugrundegelegten Umkehrbrennkammer sind einander teleskopartig überlappende und dabei einen gemeinsamen, im Flammrohr ausmündenden Ringspalt untereinander einschließende Flammrohrwandteile über Umlenkhutzen miteinander verbunden. Die betreffende Umlenkhutze ist am einen Flammrohrwandteil so befestigt, daß sie unter Einschluß einer mit dem betreffenden Ringspalt kommunizierenden Ring- oder Umlenkkammer das andere Flammrohrwandteil endseitig, außen als Wellblechbandage umschließt; in diese Wellblechbandage sind axial gerichtete, gegen die Sekundärluftströmung im äußeren Ringkanal geöffnete Luftzufuhrkanäle eingebunden, die mit der Ringkammer in Verbindung stehen.

Hierbei muß die den einzelnen Luftzufuhrkanälen zuzuführende Filmkühlluft über die betreffende Ringkammer unter verhältnismäßig großen aerodynamischen Verlusten «rigoros» um mindestens 180° umgelenkt werden.

Dabei ist es weiter nachteilhaft, daß zumindest an der stromabwärtigen, stark stufenförmigen Sektion der Umlenkhutze vergleichsweise starke Sekundärstromablösungen zu erwarten sind, die nicht nur eine homogene Konvektionskühlung der Hutze weitestgehend infrage stellen, sondern auch — unter Bezug auf die Hauptströmung im Flammrohr — stromaufwärtig der Einrichtung stattfindende anderweitige Flammrohrbeladungen aerodynamisch beeinträchtigen können.

Ferner ist als Folge der beim bekannten Fall aus einem Wellband-Blech ausgebildeten Luftzufuhrkanäle verhältnismäßig großen Durchmessers keine bei neuzeitlichen Einrichtungen dieser Art gewünschte, genau definierte Luftmengenzumessung in Form diskreter Luftstrahlen möglich. Im Hinblick auf ferner bei neuzeitlichen Einrichtungen dieser Art geforderte vergleichsweise kleine Kühlluftdurchsatzmengen würden sich im Wege der gesamten Wellblechbandausführung in der Praxis kaum realisierbare «winzige» Zumeßschlitze ergeben. Mithin kann der bekannte Fall als Einrichtung verstanden werden, die neben den erwähnten Mängeln einen vergleichsweise großen Kühlluftmengendurchsatz sowie einen entsprechend hohen Kühlluftverbrauch verlangt.

Aus der DE-PS 2 054 002 (s.h. auch GB-PS 1 309 180) ist ferner eine Kühlfilmeinrichtung für Gasturbinentriebwerke bekannt, bei der in mindestens einer rings um das Flammrohr verlaufenden Ausbuchtung der Wand über den Flammrohrumfang verteilte Öffnungen für den Durchtritt der Kühlluft in das Flammrohr angeordnet und durch ein Abschirmblech gegen den Flammraum abgeschirmt sind, mit dem sie über einen bezüglich der Hauptströmungsrichtung im Flammrohr gleichgerichteten Austritt für den Kühlluftfilm in Strömungsverbindung stehen sollen.

Vorrangig sollen dabei die zuvor genannten Öffnungen bzw. Luftzufuhrbohrungen, in bezug auf die Hauptströmungsrichtung der Verbrennungsgase, stromab des Scheitels der betreffenden Ausbuchtung bzw. Ringkammer angeordnet sein.

Der vorliegende bekannte Fall beinhaltet keinerlei definitive Aussage darüber, von welcher Richtung aus die genannte Ausbuchtung in einem Brennkammersekundärluftkanal anzuströmen wäre. Auf jeden Fall ragt im vorliegenden bekannten Fall die Ausbuchtung relativ weit radial in den Sekundärluftkanal hinein unter Zugrundelegung einer vergleichsweise großen Wulst- bzw. Ringkammerhöhe; es kragt im bekannten Fall also die Ringkammer nebst Wulst im Wege eines relativ schroff und radial weit ausgeprägten Krümmungsverlaufs in die Sekundärströmung aus.

Hieraus folgt, daß die betreffende Ausbuchtung (Wulst) vorrangig entlang der stromaufwärtigen wie auch der stromabwärtigen Seite verhältnismäßig große Sekundärstromablösungsverluste erwarten läßt.

Im Benehmen mit den im bekannten Fall erwähnten Öffnungs- bzw. Luftzufuhrbohrungsanordnung sowie unter Berücksichtigung eines Umkehrbrennkammerkonzepts — bei dem die Sekundärluftströmung der Hauptströmung im Flammrohr entgegengerichtet strömt — ist somit eine sehr schlechte Luftbeladung der Ringkammer zu erwarten, da die Luftzufuhrbohrungen im Ablösegebiet liegen. Eine vergleichsweise geringe Lauflänge des «Kühlfilmes» in der Heißgasströmung folgt daraus.

Der ferner im bekannten Fall zur Homogenisierung des aus dem betreffenden Ringspalt austretenden Kühlluftstromes im Wege der örtlichen Luftzufuhrbohrung und Kammerausbildung zu erzwingende Strömungsdrall verursacht vergleichsweise große Strahlablenkverluste, da der überwiegende Massenanteil der durchzusetzenden Kühlluftströmung um etwa 270° abgelenkt werden muß. Hieraus resultiert wiederum ein verhältnismäßig großer Kühlluftverbrauch.

Die zum bekannten Fall schon erwähnten verhältnismäßig großen und ausgeprägten, durch Luftturbulenzballen hervorgerufenen Sekundärströmungsablösungen wirken sich ferner nachteilig auf eine angestrebte homogene Konvektionskühlung der Ringkammerumwandung aus.

Aus der DE-OS 2 406 277, zu deren Patentfamilie u.a. die FR-PS 2 217 584, die GB-PS 1 459 500 und die US-PS 3 845 620 gehört, ist eine Kühlfilmeinrichtung für Gasturbinentriebwerksbrennkammern bekannt, die derjenigen nach der zuvor erwähnten DE-PS 2 054 002 ähnlich und demzufolge zu einem großen Teil mit den gleichen Mängeln behaftet ist.

Auch im Falle der DE-OS 2 406 277 handelt es sich nicht um eine für Umkehrbrennkammern konzipierte oder geeignete Kühlfilmeinrichtung.

Auch bei dieser bekannten Lösung kann die kombinierte Voraussetzung nach optimaler Beladung und hoher Eindringtiefe nicht erfüllt werden, weil die relativ schroff stufenartig gegenüber der Flammrohrbewandung abgesetzt in den Sekundärkanal auskragende Strömungsdrall -Umlenkkammer entlang der stromab- oder stromaufwärtigen Ringkammerzonen im Sekundärkanal verhältnismäßig ausgeprägte Wirbel — und damit Ablösungszonen der Sekundärströmung verursachen dürfte — sei es, ob die Luftzufuhrbohrungen nun in der stromaufwärtigen oder in der stromabwärtigen seitlichen Ringkammerbewandung anzuordnen wären. Bei dieser bekannten Lösung sollen ferner die betreffenden Luftauffangbohrungen immer so angeordnet sein, daß die durch diese jeweils durchgesetzten Luftstrahlen zunächst auf eine gegenüber liegende Wand auftreffen (Diffusion), bevor sie in Richtung auf den Ringspalt umgelenkt werden können.

Insbesondere im Wege dieses Diffusionseffektes sucht die bekannte Lösung eine umfangsseitige Geschwindigkeitshomogenisierung bzw. eine möglichst turbulenzfreie Strömung der aus dem Spalt auftretenden Filmkühlluft zu schaffen. Es dürfte hierbei jedoch schwierig sein, die an der, den betreffenden Luftauffangbohrungen benachbarten Wandzonen entstehenden Hochturbulenzzonen tatsächlich im angestrebten Umfange, also im Sinne einer tatsächlich «turbulenzfreien» Filmkühlluftaustrittsströmung aufbereiten zu können, weil die durch Diffusion erzeugten Strömungsverhältnisse (indifferent) nicht klar überschaubar sind.

Neben vergleichsweise hohen Strahlablenkverlusten und einem vergleichsweise hohen Kühlluftverbrauch wird es auch im vorliegenden bekannten Fall als nachteilhaft angesehen, als Folge der erwähnten Sekundärluftablösungen keine homogene, optimale Kühlung der bei neuzeitlichen Brennkammern hochtemperaturbelasteten, die betreffende Ring- oder Drallkammer ausbildenden Wandabschnitte erzielen zu können.

Auch eine aus der EP-PS 0 049 190 bekannte Kühlfilmeinrichtung für Gasturbinenbrennkammern behandelt in keinem Punkte die spezielle an eine Umkehrbrennkammer gestellten Anforderungen, insbesondere im Hinblick auf die Minimierung der Strahlablenkverluste. Mit anderen Worten wird in diesem bekannten Fall eine identische Strömungsrichtung der Sekundärkanalluft und der Brenngase im Flammrohr vorausgesetzt. Die bekannte Kühlfilmeinrichtung ist zwischen radial beabstandete einander überlappenden Flammrohrabschnitten ausgebildet, die eine ringförmige und im wesentlichen quadratisch abgestuft ausgebildete Kammer zwischen sich einschließen. In der betreffenden oberen Kammerwand sollen dabei eine oder mehrere parallele Reihen von Luftzufuhrbohrungen angeordnet sein, über welche Prallkühlluft mit verhältnismäßig hoher Geschwindigkeit auf die betreffende gegenüberliegende, verhältnismäßig radial weit in denn Brennraum auskragende innere Kammerwand gerichtet werden soll.

Im bekannten Fall soll die betreffende, in dem Sekundärkanal auskragende äußere Kammerwand zwar schon im Interesse einer möglichst geringen Sekundärluftablösung an- bzw. abströmseitig flach konisch ansteigend bzw. flach konisch abfallend ausgebildet sein.

Diese Merkmale werden jedoch mit dem Nachteil erkauft, daß die betreffende innere Kammerwand relativ weit gegen den Brennraum vorstehen muß, um die zur Kühlfilmaufbereitung erforderliche Ringkammer überhaupt ausbilden zu können. Hierdurch dürfte nicht nur eine vergleichsweise hohe Abbrandgefahr der inneren Kammerwand, sondern auch eine unerwünschte Vorerhitzung der Kühlluft vor ihrem Eintritt ins Flammrohr zu erwarten sein.

Die zuletzt genannten Mängel dürften allenfalls teilweise nur im Wege eines vergleichsweisen hohen und gezielt örtlich verteilten Prallkühlluftdurchsatzes wieder behoben werden können.

Außerdem setzt die vorliegende bekannte Lösung zur Kühlfilmoptimierung einen verhältnismäßig langen (L) Kühlmittelaustrittskanal aus der Ringkammer voraus, und damit wiederum eine verhältnismäßig axial weit auskragende innere Abschirmlippe, die erfahrungsgemäß einem relativ hohen Abbrandverschleiß sowie örtlich hohen Temperaturwechselbeanspruchungen ausgesetzt ist, wodurch u.a. wiederum die erwünschte homogene Kühlfilmausbildung beeinträchtigt werden kann.

Einer aus der US-A-3 978 662 bekannten Kühlfilmeinrichtung liegt eine Brennkammer für Flugtriebwerke zugrunde, bei der im Sinne der Heißgashauptströmung im Flammrohr gleichsinnig gerichtet verlaufende Strömungen der betreffenden Sekundärluft in den Sekundärkanälen der Brennkammer und der Kühlfilme vorgesehen sein sollen; der bekannte Fall vermittelt keinerlei Hinweise wie bei einer Umkehrbrennkammer zu verfahren wäre, um einen über dem gesamten Umfang homogenen (Filmdicke, Geschwindigkeitsprofil) Kühlfilm mit extrem großer Heißgaslauflänge erreichen zu wollen.

Bei der bekannten Kühlfilmeinrichtung sollen zwei in ihrer Bauhöhe zueinander versetzte Flammrohrabschnitte zwischen sich eine ringförmige Tasche einschließen, die aus jeweils zwei im Querschnitt U-förmigen, mit ihren offenen Schenkelenden gegeneinander gerichteten Gabelsektionen an den Flammrohrschnitten gebildet ist; ein ringförmiger Heißgasaustrittsspalt soll zwischen den jeweils radial innenliegenden Schenkelenden der Gabelsektionen ausgebildet sein.

Bezogen auf die Strömungsrichtung der Luft im betreffenden Sekundärkanal, sollen im bekannten Fall zwar schon in das stromabwärtige Ende der Tasche radial einmündende Öffnungen vorgesehen sein. Diese Öffnungen sollen im bekannten Fall jedoch derart gegen die eine innere, axial auskragende Lippe der Kühlfilmeinrichtung gerichtet sein, daß als Folge der auf diese Lippe auftreffenden Einzelluftstrahlen eine mehr oder weniger ausgeprägt diffuse Strömung und Luftvermischung erzeugt wird. Erst im Wege einer weiteren oder sekundären Diffusion der Luftströmung, bei der also die Kühlluft auf verhältnismäßig langer Wegstrecke, stromab des freien Endes dieser Lippe, um 180° in Richtung auf den Ringspalt abgelenkt werden soll, dürfte im bekannten Fall die Kühlfilmhomogenisierung als abgeschlossen gelten können. Im bekannten Fall muß also die angestrebte Homogenisierung des Kühlfilms mit dem Nachteil eines verhältnismäßig langen und verlustreichen (Wandreibung) Kühlluftflusses für die gesamte Kühlluft erkauft werden. Außerdem ragen dabei die die betreffende Tasche der Kühlfilmeinrichtung ausbildenden Flammrohrsektionen unter einem noch vergleichsweise an- bzw. abströmseitig verhältnismäßig steilen Anstellwinkel — bezogen auf den übrigen Flammrohrwandverlauf — in die Sekundärströmung der Brennkammer hinein, was sich als Folge örtlich bedingter Sekundärstromablösungen u.a. nachteilhaft auf eine optimale aerodynamische Beladung der Tasche sowie auf eine örtlich gleichförmige und effiziente Kühlung der zugehörigen Flammrohrsektionen auswirken dürfte.

Der Erfindung liegt die Aufgabe zugrunde, eine Umkehrbrennkammer mit einer Kühlfilmeinrichtung gemäß Oberbegriff des Patentanspruchs 1 anzugeben, die bei räumlich gedrungener Bauweise einen über dem gesamten Umfang homogen ausgearbeiteten Kühlfilm mit verhältnismäßig großer Heißgaseindringtiefe aerodynamisch verbrauchs- und verlustarm bereitstellt.

Die gestellte Aufgabe ist mit den Merkmalen des Kennzeichnungsteils des Patentanspruchs 1 erfindungsgemäß gelöst.

Aufgrund der innerhalb des Sekundärkanals flach elliptischen Konturierung der Ringkammer bei gegenüber der Sekundärluftströmung entsprechend aerodynamisch günstiger Gestaltbarkeit der betreffenden Flammrohrabschnitte (Ausbauchung) im Sekundärkanal kann im Wege der beschriebenen Anordnung der Radialbohrungen, unter vollen Ausnutzung der Kammerinnenlänge, eine mit verhältnismäßig geringen Strahlablenkungsverlusten verbundene Strömungsumlenkung der Kühlluft erfolgen; aufgrund der aerodynamisch unbehinderten Luftentnahme ist somit eine äußerst günstige Luftbeladung der Ringkammer bei zugleich großer Lauflänge des Kühlfilms gewährleistet; die beschriebene Anordnung der Radialbohrungen selbst sorgt wiederum für eine ablösungsfreie Strömung im Sekundärkanal, zu Gunsten einer Konvektionskühlungseffektivität der Einrichtung.

Äußerst vorteilhaft wirkt sich die erfindungsgemäße Teilstromabspaltung auf einen über dem gesamten Umfang radial und axial homogenen Kühlfilm aus; die hierdurch weitestgehend der flach-elliptischen Innenkonturierung folgenden Rezirkulationswirbel füllen dabei die «aerodynamischen Lücken» zwischen den über die Radialbohrungen zugeführten diskreten Luftstrahlen aus. Es ist dabei durchaus erfindungsbedeutsam, daß der auf die betreffenden abgespaltenen Rezirkulationswirbel anfallende Luftanteil halb so groß oder gar geringer als die Hälfte der insgesamt durchzusetzenden Luftmenge sein kann, zu Gunsten verhältnismäßig geringer Kammerabmessungen, insbesondere, was die radiale Bauhöhe im Hinblick auf die flache Bauweise betrifft.

Vorteilhaft kann ferner eine Kühlfilmeinrichtung mit extrem kurzem axialen Lippenüberhang geschaffen werden; in die Heißgasströmung auskragende Ausbuchtungen oder Ausbauchungen sowie deren nachteilhafte Folgen werden vermieden.

Weitere vorteilhafte Ausgestaltungen des Erfindungsgegenstandes gehen aus den Patentansprüche 2 bis 5 hervor.

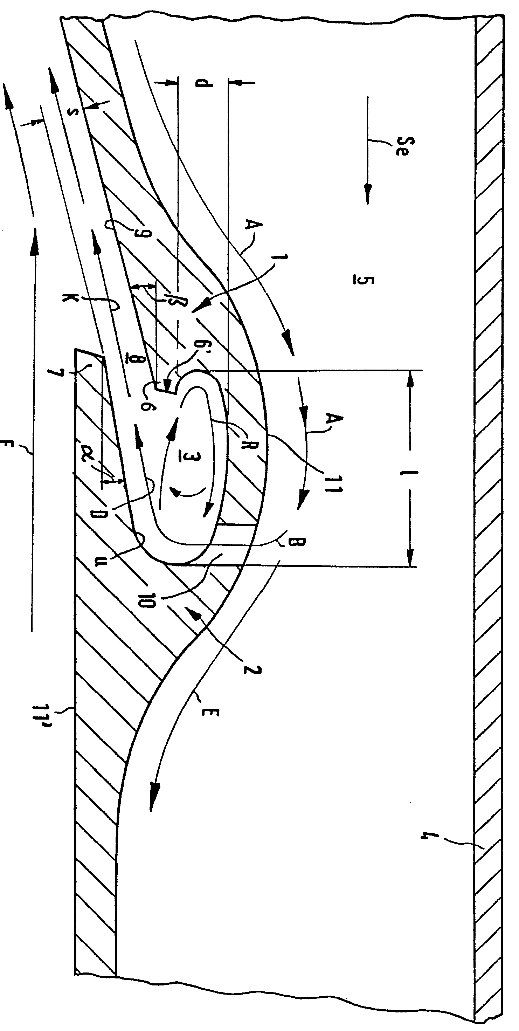

Nachstehend wird die Erfindung anhand eines in der Zeichnung dargestellten Ausführungsbeispiels weiter erläutert, und zwar im Wege einer als Längsschnitt dargestellten Umkehrbrennkammersektion.

Bei einer in der Zeichnung abschnittsweise dargestellten Umkehrringbrennkammer eines Gasturbinentriebwerkes soll mindestens eine Kühlfilmeinrichtung eine zwischen Flammrohrwandabschnitten 1, 2 eingeschlossene, drallkammerartige Ringkammer 3 aufweisen, die aus einem zwischen dem Flammrohr und einer Brennkammeraußengehäusestruktur 4 ausgebildeten, entgegen der Hauptströmungsrichtung F im Flammrohr mit Sekundärluft Se beaufschlagten, hier beispielsweise äußeren Sekundärluftkanal 5 Kühlluft in Form diskreter Luftstrahlen B zugeführt wird; aus der Ringkammer 3 soll die Kühlluft nach entsprechender Aufbereitung R, D in umgekehrter Strömungsrichtung über einen zwischen lippenartig einander übergreifenden Enden 6, 7 der Flammrohrwandabschnitte 1, 2 ausgebildeten Ringspalt 8 filmartig (Pfeilfolge K) gegen die daran angrenzende Flammrohrwand 9 ausgeblasen werden. Die Ringkammer 3 weist einen in Brennkammer- bzw. Flammrohrlängsrichtung flach elliptisch konturierten Querschnitt auf; zusammen mit in dem in bezug auf die Hauptströmungsrichtung der Sekundärluft Se stromabwärtige Ende der Ringkammer 3 etwa senkrecht darin einmündenden, parallel und in verhältnismäßig dichter Folge nebeneinander angeordneten Radialbohrungen 10 werden mit einem Teil der zugeführten Kühlluft eigenständige, der elliptischen Ringkammerkontur folgenden Rezirkulationswirbel R erzeugt, die zur Vergleichsmäßigung des über die Radialbohrungen 10 zunächst im Sinne diskreter Luftstrahlen B zugeführten, in Richtung der Hauptströmung F ins Flammrohr um etwa 90° abgelenkten Hauptkühlluftstromes E vorgesehen sind. Die die Ringkammer 3 und den Ringspalt 8 einschließenden Flammrohrwandabschnitte 1, 2 ragen im Wege einer gegenüber der Sekundärluftströmung Se anströmseitig gleichmäßig flachwinkelig ansteigenden und abströmseitig wieder gleichmäßig flachwinklig abfallenden Ausbauchung 11 in den Ringspalt 5 hinein. Gemäß Pfeilfolge A, E werden hierdurch die betreffenden Wandabschnitte 1, 2 ablösungsfrei homogen umströmt und optimal konvektiv gekühlt.

Wie ferner aus der Patentzeichnung ersichtlich, erfolgt also die Teilstromspaltung zwecks Ausbildung der Rotationswirbel R sowie die Hauptströmungsumlenkung an einer den Radialbohrungen 10 gegenüberliegenden Umlenkzone u der Ringkammer 3. Aus dieser Zone u setzt sich hier z.B. die Innenwand der Ringkammer 3 zusammen mit dem örtlichen Verlauf der Flammrohrwand 11' in Richtung auf das zugehörige Lippenende 7 hin kontinuierlich verjüngend fort.

Im Rahmen einer vorteilhaften Ausbildung kann die Ringkammer 3 etwa um ein Vierfaches länger (1) als hoch ausgeführt sein, wobei die relative Ringkammerhöhe (d) und die Kühlfilmspaltweite (s) maßlich annähernd gleich sind.

Wie in der Zeichnung ferner dargestellt, ist der Neigungswinkel α, den die sich kontinuierlich verjüngende Innenwand der Ringkammer 3 vom Lippenende 7 aus gegenüber der Brennkammerlängsmittelebene einschließt, im wesentlichen gleich demjenigen Neigungswinkel β, den die auf der gegenüberliegenden Seite liegende Flammrohrwand 9 vom Lippenende 6 aus gegenüber der Brennkammerlängsmittelebene einschließt. Hierbei kann davon ausgegangen werden, daß z.B. die Flammrohrwand 11 parallel zur Brennkammerlängsmittelebene verläuft. Im Hinblick auf die genannten Neigungs- bzw. Wandanstellwinkel kann also ein parallelwandiger oder — wie dargestellt — in Richtung der Kühlluftströmung D, K sich geringfügig konisch verjüngender Ringspalt 8 ausgebildet werden.

Wie in der Zeichnung ferner dargestellt, verläuft dort die Hauptströmungsumlenkung von B nach D um einen etwas geringeren Winkel-Betrag als 90° im Sinne des Verlaufs der Strömung des Kühlfilmes K am Ringspalt 8.

Die Erfindung könnte aber durchaus auch dann vorteilhaft eingesetzt werden, wenn ein parallel zur Brennkammerlängsmittelebene verlaufender Kühlfilmfluß im Hinblick auf die entsprechend gewölbte Flammrohrwandgeometrie gefordert wird, wobei dann die Strömung von B nach D genau oder annähernd um 90° abgelenkt werden könnte.

In der Patentzeichnung kennzeichnet D also den jeweils ringkammerseitig aufbereiteten Hauptkühlluftstrom, K den aus letzterem ausgebildeten Kühlfilm.

Wichtig ist es ferner, daß die Radialbohrungen 10, als Folge deren angegebener Anordnung, ebenfalls keine Nachlauf-Sekundärstromablasungen provozieren, so daß die Sekundärströmung (Pfeil E) also auch stromab der Bohrungen 10 homogen verläuft; es ist somit möglich, z.B. für die Misch- oder Verbrennungsluftbeladung des Flammrohrs an der — in bezug auf die Hauptströmungsrichtung F — stromaufwärtigen Seite der Kühlfilmeinrichtung, den Impuls des statischen Druckes zu nutzen.

Das innere Ende 6 des Flammrohrwandabschnitts 1 hat die Funktion einer «Abschällippe»; sie bewirkt innerhalb der Ringkammer 3 eine eindeutige Strömungsaufteilung in die Rezirkulationswirbel R und in den aus der Hauptumlenkung abgespaltenen Hauptkühlluftstrom D zu Gunsten einer extrem großen Lauflänge des Kühlfilms K.

Der ablösungsfreie Strömungsverlauf (Pfeil E) im Sekundärkanal 5 wirkt sich ferner z.B. auf eine optimale Betriebsweise einer der betreffend dargestellten Kühlfilmeinrichtung in bezug auf die Hauptströmungsrichtung F weiter stromaufwärtig vorgeschaltete andere, im erfindungsgemäßen Sinne ausgebildete Kühlfilmeinrichtung äußerst vorteilhaft aus.

Wie bereits erörtert, beinhaltet die Erfindung eine Massenstromaufteilung D, R bei der die abgespaltene Rotationswirbel R — unter 180° — Umlenkung — wieder auf die Massenströme B der diskreten Luftstrahlen trifft. Dort teilen sich die Wirbel R auf und füllen die Zwischenräume zwischen den diskreten Massenstromstrahlen B auf.

Die örtliche Anordnung der Radialbohrungen 10 wirkt sich ferner günstig auf eine vergleichsweise geringe relative Bauhöhe d der Ringkammer 3 aus.

Bezüglich der angestrebten Homogenität des Kühlfilms K ist es wichtig, daß einerseits die zugeführten diskreten Strahlen B expandieren und durch eine um etwa 90° erfolgende Umlenkung in der Ringkammer 3 zusätzlich zur Wandreibung breiter werden, andererseits durch die abgespaltenen Rotationswirbel R die Volumina zwischen den diskreten Strahlen B aufgefüllt werden.

Die Kühlfilmeffektivität ist ferner dadurch sehr hoch, daß einerseits die Wandreibung der Luftströmung in der Ringkammer 3 verhältnismäßig gering zu veranschlagen ist, andererseits die Richtung der Rotationswirbel R mit der Richtung der diskreten Luftmassenstrahlen B gleichsinnig und dementsprechend verlustarm ist.

Die örtliche Einmündungsstelle der Radialbohrungen 10 in die Ringkammer 3 könnte im Rahmen der Erfindung auch so beschrieben werden, daß die Radialbohrungen —in bezug auf die Hauptströmungsrichtung F im Flammrohr — am stromaufwärtigen Ende der Ringkammer 3 in dieselbe einmünden.

Der Erfindungsgegenstand kann auch bei Rohrbrennkammern vorteilhaft eingesetzt werden.

## Patentansprüche

1. Umkehrbrennkammer, insbesondere Umkehrringbrennkammer, für Gasturbinentriebwerke mit einem innerhalb einer Gehäuseaußenstruktur (4) angeordneten Flammrohr, mit einer Kühlfilmeinrichtung, die eine zwischen Wandabschnitten (1, 2) des Flammrohrs angeordnete Ringkammer (3) umfaßt, der aus einem zwischen Flammrohr und Gehäuseaußenstruktur (4) liegenden Sekundärluftkanal (5) Kühlluft (B) zugeführt wird, die entgegen der Strömungsrichtung im Sekundärluftkanal (5) über einen zwischen benachbarten Flammrohrwandenden (6, 7) ausgebildeten Ringspalt (8) tangential gegen die Flammrohrwand (9) ausgeblasen wird, gekennzeichnet durch folgende Merkmale:

a) Die Ringkammer (3) weist einen in Flammrohrlängsrichtung flach elliptisch konturierten Querschnitt auf;

b) die Ringkammer (3) ist in einer gegenüber der Sekundärluftströmung (Se) flachwinkelig ansteigend und wieder abfallend gekrümmten Ausbauchung (11) der Flammrohrabschnitte (1, 2) angeordnet;

c) etwa senkrecht in das in bezug auf die Hauptströmungsrichtung (Se) im Sekundärluftkanal (5) stromabwärtige Ende der Ringkammer (3) darin einmündende Radialbohrungen (10) sind zur Führung der Kühlluft (B) gegen eine kammerinnenseitige Umlenkzone (u) vorgesehen, aus der die Kühlluftströmung in innerhalb der Ringkammer (9) rezirkulierende Teilströme (R) und in einen in Richtung auf den Ringspalt (8) abströmenden aus den Teilströmen (R) homogenisierten Hauptkühlluftstrom (D) aufgeteilt wird.

2. Umkehrbrennkammer nach Anspruch 1, dadurch gekennzeichnet, daß ein inneres der beiden den Ringspalt (8) ausbildenden Flammrohrwandenden (6, 7) eine gegen die Kühlluftströmung in der Ringkammer (3) gerichtete Abschällippe ausbildet.

3. Umkehrbrennkammer nach Anspruch 1 oder 2, dadurch gekennzeichnet, daß die Länge (1) der Ringkammer (3) etwa gleich ihrer vierfachen Höhe (d) ist, wobei die Höhe (d) und die Ringspaltweite (s) maßlich etwa gleich sind.

4. Umkehrbrennkammer nach einem oder mehreren der Ansprüche 1 bis 3, dadurch gekennzeichnet, daß die zum einen Flammrohrwandende (7) auslaufende Innenwand der Ringkammer (3) und die eine zum inneren Flammrohrwandende (6) auslaufende Flammrohrwand (9) gegenüber der Brennkammerlängsachse bzw. -mittelebene derart geneigt sind, daß ein parallelwandiger oder sich in Strömungsrichtung geringfügig konisch verjüngender Ringspalt (8) entsteht.

5. Umkehrbrennkammer nach einem oder mehreren der Ansprüche 1 bis 4, dadurch gekennzeichnet, daß die Radialbohrungen (10) in verhältäßig geringer Umfangsbeabstandung parallel nebeneinander angeordnet sind.

## Claims

1. Reversing combustion chamber, particularly a reversing annular combustion chamber, for gas turbine propulsion units comprising a flame tube disposed inside an outer housing structure (4) with a cooling film device comprising between wall portions (1, 2) of the flame tube, an annular chamber (3) to which cooling air (B) is supplied from a secondary air duct (5) disposed between the flame tube and the outer housing structure (4) and which is blown tangentially against the flame tube wall (9) against the direction of flow in the secondary air duct (5) via an annular gap (8) constructed between adjacent flame tube wall ends (6, 7), characterised by the following features:

a) the annular chamber (3) comprises a cross-section which is contoured to an elliptically flattened shape in the longitudinal direction of the flame tube;

b) the annular chamber (3) is disposed in a curved bulge (11) in the flame tube portions (1, 2) which rises at a shallow angle in relation to the secondary air flow (Se) and then falls again;

c) for guiding the cooling air (B) to a direction-reversing zone (u) on the inside of the chamber, radial bores (10) are provided which discharge at right-angles into that end of the annular chamber (3) which is on the downstream side in relation to the main direction of flow (Se) in the secondary air duct (5), the cooling air flow out of the said direction-reversing zone (u) being sub-divided into partial currents (R) which recirculate within the annular chamber (9) and a main flow (d) of cooling air homogenised from the partial currents (R) and flowing in the direction of the annular gap (8).

2. A reversing combustion chamber according to Claim 1, characterised in that one of the flame tube wall ends (6, 7) which is on the inside of the two which constitute the annular gap (8) forms a peeling-off lip which is directed against the flow of cooling air in the annular chamber (3).

3. A reversing combustion chamber according to Claim 1 or 2, characterised in that the length (1) of the annular chamber (3) is substantially equal to four times its height (d), the height (d) and the width (s) of the annular gap being substantially the same size.

4. A reversing combustion chamber according to one or more of Claims 1 to 3, characterised in that the inside wall of the annular chamber (3) which runs out at one flame tube wall end (7) and the flame tube wall (9) running out at the inner flame tube wall end (6) are so inclined in respect of the longitudinal axis or median plane of the combustion chamber that an annular gap (8) is formed which has parallel walls or which tapers slightly conically in the direction of flow.

5. A reversing combustion chamber according to one or more of Claims 1 to 4, characterised in that the radial bores (10) are disposed parallel with and alongside one another, the distance between their peripheries being relatively small.

## Revendications

1. Chambre de combustion à retournement, notamment chambre de combustion annulaire à retournement pour les moteurs de turbine à gaz avec un tube à flamme placé dans une structure externe de boîtier (4), avec un dispositif de refroidissement par film, qui comprend une chambre annulaire (3) disposée entre les parties de paroi (1, 2) du tube à flamme, dans laquelle est injecté de l'air de refroisissement (B) provenant d'un canal d'air secondaire (5) placé entre le tube à flamme et la structure externe de boîtier, qui est injecté, à l'opposé du sens d'écoulement dans le canal d'air secondaire (5) par l'intermédiaire d'une fente annulaire (8) formée entre des extrémités voisines de paroi de tube à flamme (6, 7), tangentiellement à la paroi de tube à flamme (9), caractérisée en ce que:

a) la chambre annulaire (3) présente une section elliptique aplatie dans le sens longitudinal du tube à flamme,

b) la chambre annulaire (3) est disposée dans une protubérance (11) des parties de paroi (1, 2) du tube à flamme, montant d'une part avec un faible angle par rapport à l'écoulement d'air secondaire (Se), puis descendant ensuite;

c) à peu près perpendiculairement à la direction principale d'écoulement (Se) dans le canal d'air secondaire (5), à l'extrémité aval de la chambre annulaire (3) sont prévus des trous radiaux (10) y débouchant, pour diriger l'air de refroidissement (B') sur une zone (u) de déviation interne à la chambre, sur laquelle le courant d'air de refroidissement est divisé en des courants partiels (R) recirculant dans la chambre annulaire (9) et en un courant d'air de refroidissement principal (D) homogénéisé à partir des courants partiels (R), s'écoulant direction de la fente annulaire (8).

2. Chambre de combustion à retournement selon la revendication 1, caractérisée en ce que l'une des extrémités de paroi de tube à flamme (6, 7) interne formant la fente annulaire (8) constitue une lèvre de découpe dirigée contre l'écoulement de l'air de refroidissement dans la chambre annulaire (3).

3. Chambre de combustion à retournement selon la revendication 1 ou 2, caractérisée en ce que la longueur (l) de la chambre annulaire (3) est égale à environ quatre fois sa hauteur (d), la hauteur (d) et la largeur de fente (s) étant à peu près égales.

4. Chambre de combustion à retournement selon une ou plusieurs des revendications 1 à 3, caractérisée en ce que la paroi interne de la chambre annulaire (3) définissant à l'extrémité de paroi de tube à flamme (7) et la paroi de tube à flamme (9) finissant en une extrémité interne de paroi de tube à flamme (6) sont inclinées par rapport à l'axe longitudinal de la chambre de combustion ou bien par rapport à son plan médian, de telle façon qu'elles délimitent une fente annulaire (8) à bords parallèles, ou se rétrécissant coniquement dans le sens de l'écoulement.

5. Chambre de combustion à retournement selon l'une ou plusieurs des revendications 1 à 4, caractérisé en ce que les trous radiaux (10) sont disposés côte à côte parallèlement avec un écart relativement faible.